# EUROPEAN PATENT APPLICATION

(11) **EP 2 631 815 A1**
(43) Date of publication of application: **28.08.2013**
(21) Application number: 11833840.9
(22) Date of filing: 18.10.2011
(51) Int. Cl.: G06F 17/30

(54) **METHOD AND DEVICE FOR ORDERING SEARCH RESULTS, METHOD AND DEVICE FOR PROVIDING INFORMATION**

(30) Priority: 18.10.2010 CN 201010517321
(71) Applicant: China Mobile Group Sichuan Co., Ltd., Chengdu, Sichuan 610041 (CN)
(72) Inventor: WANG, Quanli, Chengdu Sichuan 610041 (CN); JIAN, Qin, Chengdu Sichuan 610041 (CN); GUO, Zhengping, Chengdu Sichuan 610041 (CN); ZENG, Dong, Chengdu Sichuan 610041 (CN); LIAO, Qinyun, Chengdu Sichuan 610041 (CN); XIAO, Wei, Chengdu Sichuan 610041 (CN); YANG, Junzheng, Chengdu Sichuan 610041 (CN); ZHENG, Changsong, Chengdu Sichuan 610041 (CN)
(74) Representative: Johansson, Lars E.
(86) International application number: PCT/CN2011/080886
(87) International publication number: WO 2012/051934

(57) **Abstract**

The present invention provides an information providing method, comprising: acquiring a search keyword input by a user; selecting at least one search strategy from the preset search strategies; with respect to each selected search strategy, processing the search keyword according to the search strategy, searching the information corresponding to the processed search keyword; and providing the searched information to the user. According to the present invention, it is able to solve the problem of a low accuracy of search and a small amount of the searched information in the prior art when searching information.

## Description

The present application claims the priority of the Chinese patent application No.201010517321.0 filed on October 18, 2010 and entitled "method and device for sorting search results", which is incorporated herein by reference in its entirety.

### TECHNICAL FIELD

The present invention relates to the field of Internet technology, in particular to search engine technology, and more in particular to a method and a device for sorting search results, a method and a device for providing information.

### BACKGROUND

With the development of Internet technology, more and more information resources choose network as a carrier for the propagation thereof. In order to enable users to acquire the desired information from massive amounts of Internet information, most of the websites provide search function. When the users are desired to search for information, they can input a search keyword. The website allows the users to look for information relevant to the search keyword and then provides it to the users.

The existing search technologies include general search technology and vertical search technology. The method of searching for information by a website based on the general search technology includes: receiving a search keyword input by a user, searching for information relevant to the search keyword from all the stored information, and providing the searched information to the user. The vertical search technology, as a subdivision and extension of the general search technology, is a professional one with respect to a certain field, which includes: pre-consolidating the information stored in a database of a website in accordance with the field to which the information belongs, directionally extracting the desired information field by field, processing the information, and returning it to the user in a certain manner. When the users are desired to search for information, they can input a search keyword in a certain search field. The website searches for the relevant information from all of the information included in the search field in accordance with the input search keyword, calculates the correlation degree between the input search keyword and the searched information, and scores the searched information in accordance with the correlation degree, sorts the searched information in accordance with the scores thereof, and displays the searched information to the users in the resultant order. The vertical search technology may be applied to many search fields, e.g., enterprise library search, supply and demand information search, shopping search, real estate search, human resource search, map search, music search and image search. Compared with general search technology, which has massive amounts of unordered information, the vertical search technology is more focused, specific and professional.

It can be seen from the above, according to the prior art, usually the information is searched directly in accordance with the search keyword input by the user. However, such a search keyword may be inaccurate and unable to reflect the user's search intention. If the solution of the prior art is adopted, i.e., the search is performed merely in accordance with the search keyword input by the user, the searched information may not contain the information the user wants. As a result, the accuracy of search is low and the amount of the searched information is small.

### SUMMARY

The present invention provides a method and a device for sorting search results, and a method and a device for providing information, so as to solve the problem of a low accuracy of search and a small amount of the searched information in the prior art when searching for information.

In one embodiment, the present invention provides a method for sorting search results, comprising the following steps: A. for each search item, extracting an M*N search strategy submatrix from an N*N search strategy matrix, each row of the search strategy submatrix corresponding to a search strategy layer, priority weights of the search strategy layers corresponding to the first to the M^{th} rows increasing or decreasing progressively, the N search strategies on the same search strategy layer being of the same priority, M and N being natural numbers greater than 1, and M≤N; B. selecting at least one search strategy from each search strategy layer of the search strategy submatrix to assemble a query set, matching the query sets with all searched files according to the search strategies, and multiplying file scores by the priority weights corresponding to the search strategies to obtain overall file cores, each overall file score being used as a result set object; C. generating M data blocks, each of the data blocks corresponding to at least one result set object, and storing all the result set objects in an array, each of the data blocks including scope information of a data field, i.e., superscripts and subscripts of the array; and D. selecting the result set objects from the respective data block and assembling the selected result sets to form a complete result set.

In another embodiment, the present invention further provides a device for sorting search results, comprising a search strategy matrix generating module configured to, for each search item, extract an M*N search strategy submatrix from an N*N search strategy matrix, each row of the search strategy submatrix corresponding to a search strategy layer, priority weights of the search strategy layers corresponding to the first to the M^{th} rows increasing or decreasing progressively, the N search strategies on the same search strategy layer being of the same priority, M and N being natural numbers greater than 1, and M≤N; a result set object module configured to select at least one search strategy from each search strategy layer of the search strategy submatrix to assemble a query set, match the query sets with all searched files according to the search strategies, and multiply file scores by the priority weights corresponding to the search strategies to obtain overall file scores, each overall file score being used as a result set object; a data block dividing module configured to generate M data blocks, each of the data blocks corresponding to at least one result set object, and store all the result set objects in an array, each of the data blocks including scope information of a data field, i.e., superscripts and subscripts of the array; and an assembling module configured to select the result set objects from the respective data block and assemble the selected result sets to form a complete result set.

It can be seen from the above technical solutions, the search result sets are divided into data fields by generating a search strategy matrix from several search strategies, then the search result sets are assembled to ensure the sorting accuracy of the search result sets. Meanwhile, real time data such as user click rate is added into the sorting weight, and the real time of sorting the result sets can be ensured by means of an in-block secondary sorting. In addition, according to the present invention, the search rules may be formed as plug-ins, so as to facilitate the extension of sorting factors.

In yet another embodiment, the present invention further provides a method for providing information, comprising the steps of: acquiring a search keyword input by a user; selecting at least one search strategy from the preset search strategies; with respect to each selected search strategy, processing the search keyword according to the search strategy, and searching the information corresponding to the processed search keyword; and providing the searched information to the user.

In yet another embodiment, the present invention further provides a device for providing information, comprising a keyword acquiring unit configured to acquire a search keyword input by a user; a strategy selecting unit configured to select at least one search strategy from the preset search strategies; an information searching unit configured to, with respect to each selected search strategy, process the search keyword acquired by the keyword acquiring unit according to the search strategy, and search the information corresponding to the processed search keyword; and an information providing unit configured to provide the information searched by the information searching unit to the user.

It can be seen from the above technical solutions of the present invention, the search is not performed directly in accordance with the search keyword input by the user any more. Instead, at least one search strategy is selected at first, the search keyword input by the user is processed in accordance with the selected search strategy to obtain the processed search keyword, and then the information corresponding to the processed search keyword is searched. As a result, it is able to search for information in accordance with a plurality of search keywords. If the search keyword input by the user is inaccurate and unable to accurately reflect the user's search intention, it is able to reflect the user's search intention in an overall and accurate manner in accordance with the search keyword processed with the search strategies. As a result, it is able to improve the accuracy of search and increase the amount of the searched information.

### BRIEF DESCRIPTION OF THE DRAWINGS

Fig.1 is a basic flow chart showing a method for sorting search results according to embodiments of the present invention;

Fig.2 is a block diagram showing a device for sorting search results according to embodiments of the present invention;

Fig.3 is a schematic view showing a search strategy matrix according to embodiments of the present invention;

Fig.4 is a schematic view showing a search strategy submatrix for music search according to embodiments of the present invention;

Fig.5 is a schematic view showing the correspondence between data blocks and result set objects according to embodiments of the present invention;

Fig.6 is a schematic view showing the working principle of an assembling module 205 according to embodiments of the present invention;

Fig.7 is a work flow chart of assembling the result sets according to embodiments of the present invention;

Fig.8 is a schematic view showing a sorting factor matrix according to embodiments of the present invention;

Fig.9 is a work flow chart showing the in-block sorting according to embodiments of the present invention;

Fig.10 is a schematic view showing a method for providing inforamtion according to embodiments of the present information;

Fig.11 is a schematic view showing a search strategy matrix according to embodiments of the present invention;

Fig. 12 is a schematic view showing the information sorting results according to embodiments of the present invention; and

Fig.13 is a schematic view showing the structure of a device for providing information according to embodiments of the present invention.

### DETAILED DESCRIPTION

According to the present invention, a plurality of search strategies are divided into layers, and in-block sorting is performed on the search strategies on each layer, so as to generate a search strategy matrix according to priorities. In addition, various real-time sorting factors are added into the sorting strategies in a manner of plug-ins, so as to realize real time of sorting the search result sets.

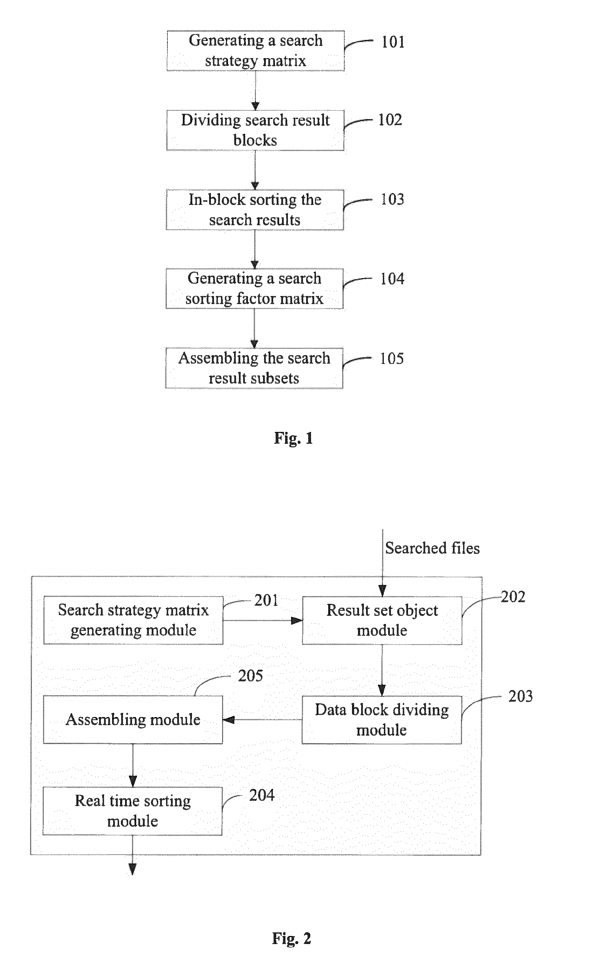

Fig.1 is a basic flow chart showing a method for sorting search results according to embodiments of the present invention. The method comprises the following steps:
Step 101: generating a search strategy matrix, i.e., selecting more than one search strategies in accordance with the search service requirement and generating a strategy matrix from the selected search strategies in accordance with priorities;
Step 102: dividing search result blocks, i.e., dividing search result blocks in accordance with the number of rows of the search strategy matrix, each row corresponding to a search result subset;
Step 103: in-block sorting the search results, i.e., performing in-block sorting on the search results in accordance with a uniform level of the search strategies of the search strategy matrix;
Step 104: generating a search sorting factor matrix, i.e., sorting the result subsets by using real-time data (e.g., user's search frequency and click rate) as the sorting factors; and
Step 105: assembling the search result subsets, i.e., selecting a number of result subsets from a respective module in accordance with the requirement on the number of the returned results, to assemble a desired result set.

Fig.2 is a diagram showing a device for sorting search results according to embodiments of the present invention. The device comprises a search strategy matrix generating module 201, a result set object module 202, a data block dividing module 203, a real time sorting module 204 and an assembling module 205.

The search strategy matrix generating module 201 is configured to generate a search strategy matrix. The search strategy is adopted for meeting the search service requirement. In the present invention, all the search strategies are classified to form a search strategy matrix.

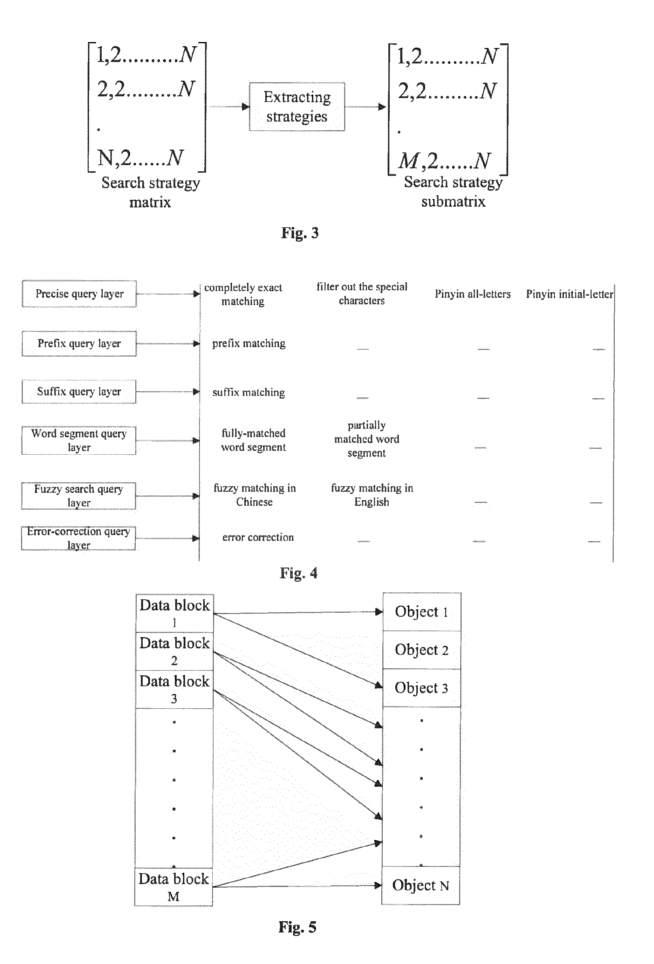

Fig.3 is a schematic view showing a search strategy matrix. The N*N matrix on the left represents a search strategy matrix consisting of N search strategies. In the actual searching process, it needs to extract strategies from the search strategy matrix to form a search strategy submatrix. Presumed that the search strategy submatrix is an M*N matrix, it may be formed in different manners in accordance with different applications.

If a single term is to be searched, each row of the first to the M^{th} rows in the search strategy submatrix is taken as a search strategy layer, with the priorities increasing or decreasing progressively. Each search strategy layer includes 1-N search strategies. If the number of the search strategies on a row is less than N, e.g., N1 (N1<N), the (N1+1)^{th} to the N^{th} locations are left blank. In this case, there exist no layers with the same priority.

If multiple terms are to be searched, due to the priorities among these terms, each row of the first to the M^{th} rows in the search strategy submatrix is taken as a search strategy layer, with the priorities increasing or decreasing progressively in accordance with a synthetic weight of the search strategies and the searched terms. Each search strategy layer includes 1-N search strategies. If the number of the search strategies on a row is less than N, e.g., N2(N2<N), the (N2+1)^{th} to the Nth locations are left blank. In this case, there exist strategy layers with the same priority. For example, if there exist L search items, the matrix size is L*(M*N).

On the same search strategy layer, the search strategies have the same priority, so that the user can extract a search strategy combination from the search strategy submatrix in accordance with the search requirement. The search strategy combination includes 1to M*N search strategies, so the user can flexibly select any number of the strategies from the search strategy matrix and sort them.

Taking vertical search for music as an example, all the search strategies are as follows:
1) completely exact matching;
2) precise query with sensitive or special characters being filtered out;
3) Pinyin all-letters query;
4) Pinyin initial-letter query;
5) prefix query;
6) suffix query;
7) fully matched word segment query;
8) partially matched word segment query;
9) fuzzy matching in Chinese;
10) fuzzy matching in English; and
11) Pinyin error-correction query.

These 11 search strategies are formed into an 11*11 search strategy matrix, and a search strategy submatrix may be extracted therefrom in accordance with the search requirements.

Fig.4 is a schematic view showing a search strategy submatrix for music search according to a specific embodiment. With respect to a single item, such as singer, album and song, the 11 search strategies are divided into 6 layers, thereby to form a 6*4 search strategy submatrix. The 6 search strategy layers include precise query, prefix query, suffix query, word segment query, fuzzy matching and error-correction query.

(1) Precise query, which may be any one of the following search strategies:
   a. completely exact matching;
   b. precise query with sensitive or special characters being filtered out (including filtering out all the sensitive and special characters, and converting the English letters into all uppercase or lowercase letters);
   c. Pinyin all-letters query (full fields of Pinyin); and
   d. Pinyin initial-letter query (initial letter field of Pinyin);
(2) Prefix query;
(3) Suffix query;
(4) Word segment query, including
   fully matched word segment query; and
   partially matched word segment query;
(5) Fuzzy matching, including:
   a. fuzzy matching in Chinese
   b. fuzzy matching in English; and
(6) Error-correction query, which is mainly used for correcting errors in Pinyin, i.e., transforming between the confusing letters such as between s and sh, and between 1 and n.

If the search is performed with respect to singer, song and album and the first 3 layers are selected, the size of the search strategy submatrix is 3*(3*4).

Usually, only parts of the search strategies in the search strategy matrix may be selected. For example, when a Chinese singer is to be searched, the strategy of fuzzy matching in English may be cancelled, and when a lyric is to be searched, usually only the strategy of word segmentation may be selected.

In the actual process, the search strategies may be mapped into corresponding numbers, and the search strategy matrix may be converted into a digital matrix.

The result set object module 202 is configured to select at least one search strategy from each search strategy layer of the search strategy submatrix to form a query set, match the query sets with all the searched files in accordance with the search strategies, and multiply file scores by the priority weights corresponding to the search strategies to obtain overall file scores. Each overall file score is used as a result set object.

Each search strategy layer is provided with a corresponding priority weight. For example, the weight is set as 100, the weight for the layer with the lowest priority is set as 1, and the weight of the layer with a next higher priority is multiplied by 100, and so on. The searched file score is multiplied by a priority weight corresponding to the search strategy to obtain an overall file score. Because there exists a relatively great difference between the overall file scores of the layers, it is very easy to divide the searched files into blocks in accordance with the search strategy layer. After being divided into blocks, the files in each block are ordered.

According to the strategy of dividing the result sets into blocks, one data block is divided for each strategy layer. If the search strategy matrix is an M*N matrix, M data blocks may be generated, and each data block corresponds to one or more result set objects. All the result set objects are stored in an array, and each data block includes the scope information of the data field, i.e., the superscripts and subscripts of the array, as shown in Fig.5.

For example, when a singer is to be searched, the result sets are divided into 6 data blocks, and a number of result set objects are selected from each data block in accordance with the requirement.

The data block dividing module 203 is configured to generate M data blocks, each of which corresponds to at least one result set object, and store all the result set objects in an array. Each data block includes the scope information of the data field, i.e., the superscripts and subscripts of the array.

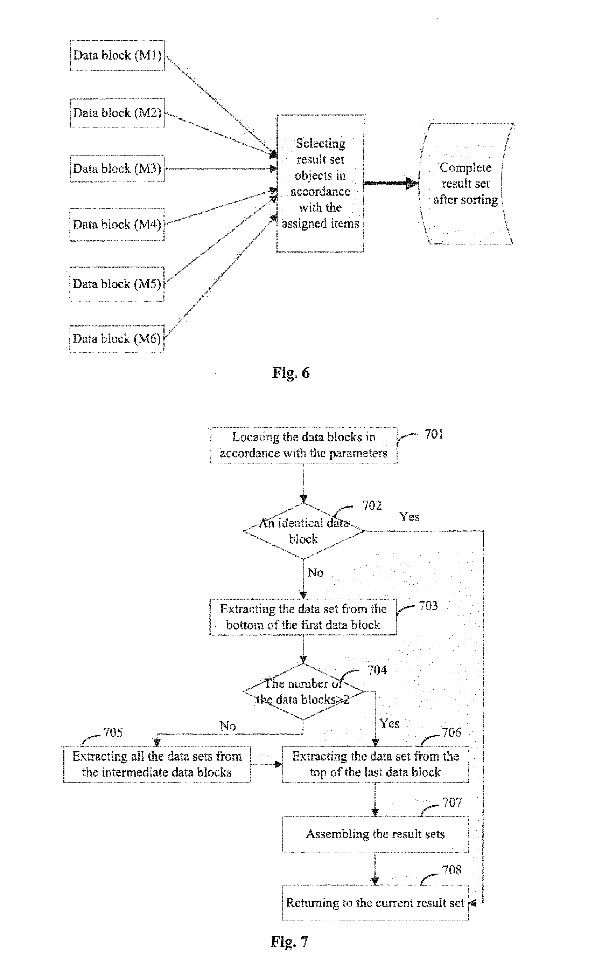

The assembling module 205 is configured to select the result set objects from a respective data block, and assemble the selected result sets to form a complete result set. Fig.6 shows the working principle thereof.

Presumed that a superscript of a field value is m and a subscript is n, m and n being both natural numbers and n>m, the assembling flow is shown in Fig.7, which comprises the following steps:
Step 701: comparing m and n with the superscripts and subscripts recorded in a respective data block sequentially so as to locate the data block;
Step 702: judging whether m and n is within an identical data block, if not, executing Step 703 and otherwise turning to Step 707;
Step 703: the data block where the superscript m is located is regarded as a first data block and the data block where the subscript n is located is regarded as a last data block, extracting a result set object subset consisting of the result set object corresponding to the superscript m to the last result set object from the first data block, judging whether the number of the data blocks between the superscript m and the subscript n is greater than 2, if yes, turning to Step 705 and otherwise turning to Step 704;
Step 704: extracting all the result subsets from all the data blocks between the first data block and the last data block;
Step 705: extracting an upper data subset consisting of a first result set object to the result set object corresponding to the subscript n from the last data block;
Step 706: combining the extracted result set objects sequentially as a current result set; and
Step 707: returning to the current result set.

The real-time sorting module 204 is configured to adjust the sorting of the search results in accordance with the collected real-time data correspondingly.

Usually, a vertical search engine has high requirements on the real-time sorting of data. For example, the popularity of a song may be reflected by the user's click rate and audition amount. These data are all real-time, so it needs to perform secondary real-time sorting on the searched results. In order to solve this problem, these data are used as external sorting factors, based on which the secondary in-block real-time sorting is performed. An overall secondary sorting is not selected, because the result sets will be disordered due to the overall secondary sorting, and the performance will also be affected.

The real-time sorting module 204 includes an external sorting factor unit, an in-block sorting unit and a data set secondary assembling unit.

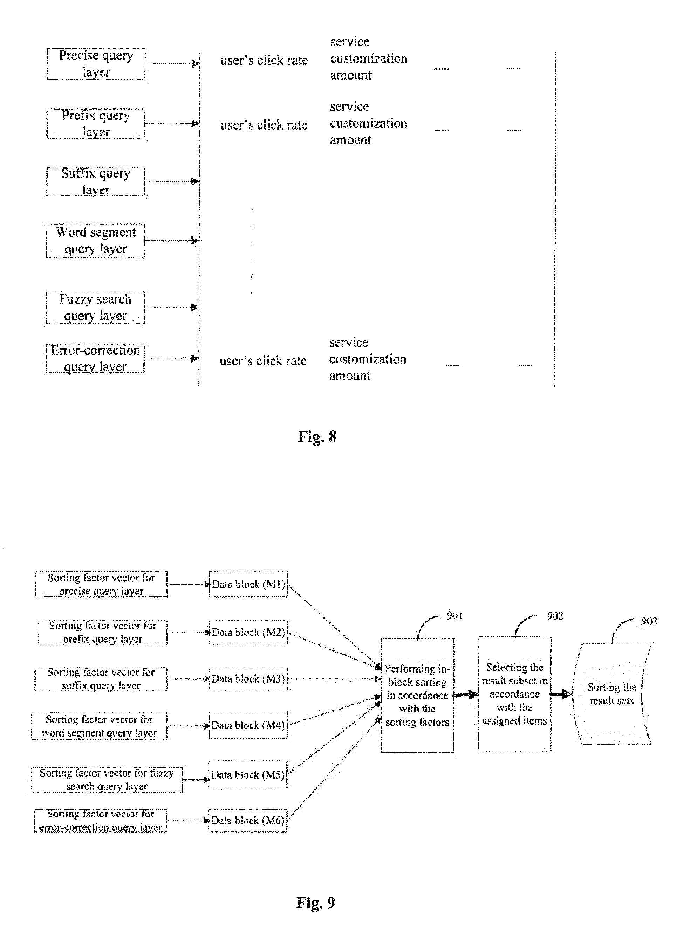

The external sorting factor unit is configured to use the collected real-time data as the external sorting factors to generate a sorting factor matrix, each row of which corresponds to a search strategy layer of the search strategy submatrix. Taking song searching as an example, the user's click rate and service customization amount are used in the present invention as the external sorting factors for each search strategy layer. The resultant sorting factor matrix is shown in Fig.8.

The in-block sorting unit is configured to perform secondary sorting on the data blocks in accordance with values corresponding to the external sorting factors. In order to improve the efficiency, the sorting is only performed on the data region that have been hit, and the work flow is shown in Fig.9, which comprises the following steps:
Step 901: locating the data blocks to be sorted and the in-block regions in accordance with the parameters m and n;
Step 902: extracting values corresponding to the sorting factors from the database in real time; and
Step 903: sorting the regions.

Through in-block sorting, it is able to show the real-time sorting results to the user. For example, when a song is to be searched, it is able to not only perform the sorting in accordance with the search strategies but also reflect the popularity of the song in real time by performing secondary sorting in accordance with the factors such as the user's click rate and the service customization amount.

The data secondary assembling unit is configured to select result set objects from the data blocks sorted by the in-block sorting unit, and assemble the selected result sets to form a complete result set.

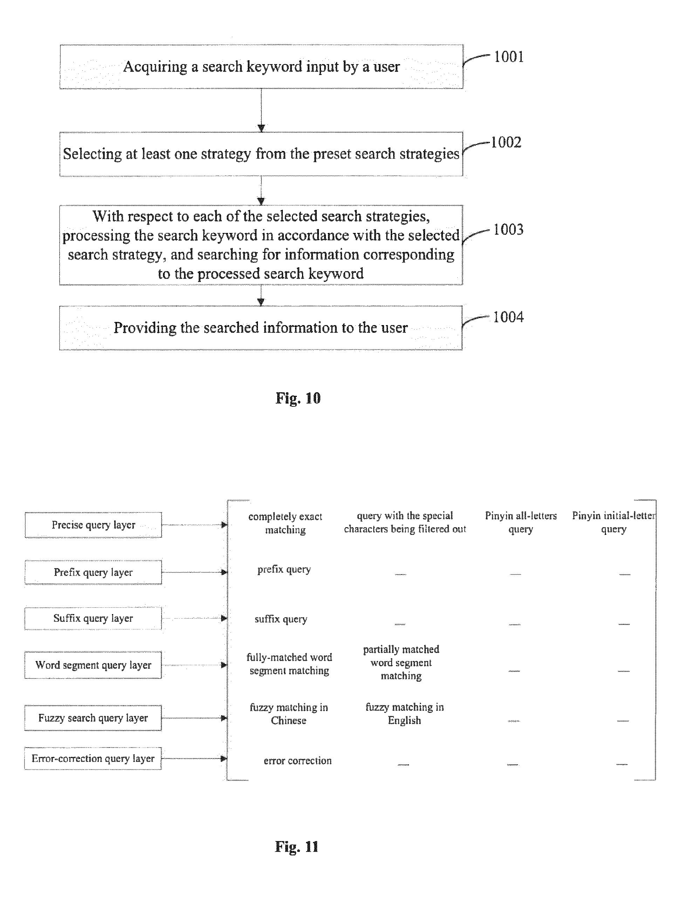

Here, the data secondary assembling unit differs from the result set object module 202 merely in the function of in-block secondary sorting via the sorting factors, as shown in Fig.11, and the specific work flow is not repeated herein.

In a word, the present invention mainly aims to solve the problem that the vertical search engine requires more sorting conditions and higher accuracy. Through the search strategy matrix and the ways such as data block division, it is able to combine the search strategies in accordance with the requirement, thereby to perform precise sorting. In addition, through the external sorting factors and the in-block secondary sorting, it is able to solve a problem on sorting the real-time results in the vertical search engine.

Taking song searching as an example, if without using the method of the present invention, the result sets of the segmentation strategy and the complete spelling strategy in the results are confused, and there is no definite bound therebetween. However, by using the method of the present invention, there exists a definite bound between the result sets.

Taking a synthetic field search for music (song, album and singer) as an example, if without using the method of the present invention, the result sets of the segmentation strategy and the complete spelling strategy in the results are confused, and sorting is not performed in accordance with the priorities such as song, singer and album. However, by using the method of the present invention, it is able to perform precise sorting on the result sets in accordance with the search strategies and the search terms.

Taking song searching as an example, through real-time sorting, it is able to not only perform the sorting in accordance with the search strategies but also reflect the popularity of the song, thereby to reflect the feature of vertical search, i.e., high requirements on sorting, and to meet the user's requirements.

The present invention further provides a method for providing information as shown in Fig.10, wherein the method comprises the following steps.

Step 1001: acquiring a search keyword input by a user. When the user searches for information in a website, the search keyword is input via a web browser and then acquired by the website.

Step 1002: selecting at least one strategy from the preset search strategies. In embodiments of the present invention, the preset search strategies include, but are not limited to, at least one of the following strategies:
(1) completely exact matching, which means that the search keyword is exactly included in a search field of the information;
(2) precise query with the sensitive or special characters being filtered out, which means that all the sensitive characters and special characters are filtered out and the English letters are converted into all uppercase or lowercase letters;
(3) Pinyin all-letters query, which means that the Chinese characters are converted into Pinyin, e.g., 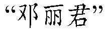 is converted into "denglijun";
(4) Pinyin initial-letter query, which means that the Chinese characters are converted into a combination of the initial letters of each character, e.g., 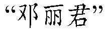 is converted into "DLJ";
(5) prefix query;
(6) suffix query;
(7) fully matched word segment query, which means that the search keyword is divided into segments and all the segments are exactly included in a search field of the information;
(8) partially matched word segment query, which means that the search keyword is divided into segments and parts of the segments are exactly included in a search field of the information;
(9) fuzzy matching in Chinese;
(10) fuzzy matching in English; and
(11) error-correction query, which means that the errors in Pinyin are corrected, i.e., transformation is performed between the confusing letters, such as between s and sh, and between 1 and n.

If the user selects search fields, the search will be performed based on the selected search fields. If the user selects one search field, e.g., the selected search field is "singer" when the user searches for music, the search is a single field search. If the user selects at least two search fields, e.g., the selected search fields are "singer", "song" and "album" when the user searches for music, the search is a multiple field search.

If the user does not select any search field, the search may be performed based on the preset default search fields. If a default search field is preset, e.g., "singer" is preset as the default search field, the search is a single field search. If at least two default search fields are preset, e.g., "singer", "song" and "album" are preset as the default search fields, the search is a multiple field search.

A correspondence between the search fields and search strategies is preset in the present invention to show the search strategies corresponding to a respective search field. When at least one search strategy is selected for a current search, with respect to each search field for the current search, a search strategy corresponding to the search field is determined from the preset search strategies, and the determined search strategy is used as the search strategy for the search field.

If the current search is a single field search, e.g., the search field is "singer", when at least one search strategy is selected for the current search, the search strategy corresponding to "singer" is determined from the preset search strategies, and the determined search strategy is used as the search strategy for "singer", i.e., for the current search.

If the current search is a multiple field search, e.g., the search fields are "singer", "song" and "album", when at least one search strategy is selected for the current search, the search strategy corresponding to "singer" is determined from the preset search strategies and the determined search strategy is used as the search strategy for "singer"; the search strategy corresponding to "song" is determined from the preset search strategies and the determined search strategy is used as the search strategy for "song"; and the search strategy corresponding to "album" is determined from the preset search strategies and the determined search strategy is used as the search strategy for "album". The search strategies for "singer", "song" and "album" are just the search strategies for the current search.

Step 1003: with respect to each of the selected search strategies, processing the search keyword in accordance with the selected search strategy, and searching for information corresponding to the processed search keyword.

In the embodiment of the present invention, a search order for the search fields are preset, e.g., the search order for music search may be singer, song and album. The search order for the search fields may be set randomly, or in accordance with the priority weight factors preset for the search fields. For example, the search order for the search fields may be determined in accordance with a descending order of the priority weight factors. Also, a search order for the search strategies is preset in the present invention. For example, the search order for the search strategies is completely exact matching, precise query with the special characters being filtered out, Pinyin all-letters query, Pinyin initial-letter query, prefix query, suffix query, fully matched word segment query, partially matched word segment query, fuzzy matching in Chinese, fuzzy matching in English and error-correction query. The search order for the search strategies may be set randomly, or in accordance with the priority weight factors preset for the search strategies. For example, the search order for the search strategies may be determined in accordance with a descending order of the priority weight factors.

After the search strategy for the respective search field is determined, the following operations may be performed on the search fields in accordance with the search order for the search fields: with respect to the search strategies for the search fields, processing the search keyword input by the user in accordance with the search order for the search strategies, and searching for the information corresponding to the processed search keyword from the search fields of the information.

For example, the search keyword input by the user is 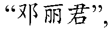 the search fields for the current search are "singer", "song" and "album", and the search order for the search fields is singer, song and album. The search strategies corresponding to "singer" are completely exact matching, Pinyin all-letters query and error-correction query, and the search order is completely exact matching, Pinyin all-letters query and error-correction query. The search strategies corresponding "song" are completely exact matching, Pinyin all-letters query, fully matched word segment query and error-correction query, and the search order is completely exact matching, Pinyin all-letters query, fully matched word segment query and error-correction query. The search strategies corresponding to "album" are completely exact matching, Pinyin all-letters query, partially matched word segment query and error-correction query, and the search order is completely exact matching, Pinyin all-letters query, partially matched word segment query and error-correction query.

At first, with respect to "singer", the information is searched in accordance with the search strategy of completely exact matching. Because the search keyword is still 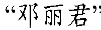 after being processed with the completely exact matching, the search is performed directly in accordance with the search keyword input by the user, i.e., the information corresponding to 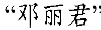 is searched from the singer fields included in the stored information. Next, the search keyword 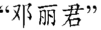 is processed in accordance with the search strategy of Pinyin all-letters query, and the information corresponding to the processed search keyword is searched from the singer fields included in the stored information. Then, the search keyword 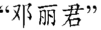 is processed in accordance with the search strategy of error-correction query, and the information corresponding to the processed search keyword is searched from the singer fields included in stored information. The process is similar as that mentioned above and will not be repeated herein.

The search keyword input by the user may be processed in accordance with the search strategies to obtain at least one processed search keywords. For example, if the search keyword input by the user is 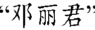 and the search strategy is Pinyin all-letters query, the resultant search keyword is "denglijun" after being processed in accordance with the search strategy. If the search keyword input by the user is 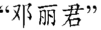 and the search strategy is fully matched word segment query, the resultant search keywords are 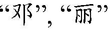 and 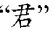 after being processed in accordance with the search strategy.

In the embodiment of the present invention, the search strategies may correspond to different priority weight factors, and at this time, the search order for the search strategies may be determined directly in accordance with the priority weight factors thereof. A plurality of search strategies may also correspond to an identical priority weight factor, and at this time the search order of the search strategies with the same priority weight factor may be determined randomly.

In order to prevent repeated search, i.e., the same information being searched in accordance with different search strategies, after the information corresponding to the processed search keyword is searched in accordance with the search strategies, the information is identified as searched. Meanwhile, when the information corresponding to the processed search keyword is searched in accordance with the search strategies, it is required to search for the information corresponding to the processed search keyword from the information that is not identified as searched.

Step 1004: providing the searched information to the user.

After the information corresponding to the search keyword input by the user has been searched through the above steps, the searched information may be sorted, and then the sorted information is provided to the user. The present invention further provides a method for sorting the searched information, which mainly includes sorting the searched information in accordance with the searching fields, and with respect to each search field, sorting the searched information in accordance with the search strategies respectively.

To be specific, the method comprises determining the priority weight factors of the search fields for the current search respectively, sorting the information searched from the search fields in accordance with the priority weight factors of the search fields, and then with respect to each search field for the current search, performing the following operations: determining the priority weight factors of the search strategies for the search fields and sorting the searched information in accordance with the priority weight factors of the search strategies.

The information searched from the search fields may be sorted in accordance with, but not limited to, a descending order of the priority weight factors of the search fields. That is, the information searched from the search field with a larger priority weight factor is placed at the top, and the information searched from the search field with a smaller priority weight factor is placed at the bottom. In addition, the information searched in accordance with the search strategies may be sorted in accordance with, but not limited to, a descending order of the priority weight factors of the search strategies. That is, the information searched in accordance with the search strategy with a larger priority weight factor is placed at the top, and the information searched in accordance with the search strategy with a smaller priority weight factor is placed at the bottom.

For example, the search fields for the current search are "singer" and "song", and the search strategies corresponding to "singer" are completely exact matching, Pinyin all-letters query and error-correction query. The information searched from the singer field in accordance with completely exact matching is information 1, information 2 and information 3. The information searched from the singer field in accordance with Pinyin all-letters query is information 4 and information 5. The information searched from the singer field in accordance with error-correction query is information 6 and information 7. The search strategies corresponding to "song" are completely exact matching, fully matched word segment query and error-correction query. The information searched from the song field in accordance with completely exact matching is information 8, information 9 and information 10. The information searched from the song field in accordance with fully matched word segment query is information 11 and information 12. The information searched from the song field in accordance with error-correction query is information 13 and information 14.

The priority weight factor of the singer field is larger than that of the song field, the priority weight factor of the completely exact matching is larger than that of the Pinyin all-letters query, the priority weight factor of the Pinyin all-letters query is larger than that of the fully matched word segment query, and the priority weight factor of the fully matched word segment query is larger than that of the error-correction query.

It can be seen from the priority weight factors of the search fields, the information searched from the singer field shall be displayed prior to the information searched from the song field. It can be seen from the priority weight factors of the search strategies, when the information searched from the singer field is to be displayed, the information searched in accordance with the completely exact matching shall be displayed at first, then the information searched in accordance with the Pinyin all-letters query is displayed, and finally the information searched in accordance with the error-correction query is displayed. When the information searched from the song field, the information searched in accordance with the completely exact matching shall be displayed at first, then the information searched in accordance with the fully matched word segment query is displayed, and finally the information searched in accordance with the error-correction query is displayed. The sorted information is shown in Table 1.

**Table 1**

| |
|---|
| Information 1, 2 and 3 |
| Information 4 and 5 |
| Information 6 and 7 |
| Information 8, 9 and 10 |
| Information 11 and 12 |
| Information 13 and 14 |

If a plurality of search strategies for a search field corresponds to an identical priority weight factor, the information searched from the search field in accordance with the search strategies corresponding to the identical priority weight factor may be sorted randomly. For example, in the above example, if the completely exact matching and the Pinyin all-letters query for the singer field have an identical priority weight factor which is larger than that of the error-correction query, and the completely exact matching and the fully matched word segment query have an identical priority weight factor which is larger than that of the error-correction query, the sorted information is shown in Table 2.

**Table 2**

| |
|---|
| Information 1, 2, 3, 4 and 5 |
| Information 6 and 7 |
| Information 8, 9, 10, 11 and 12 |
| Information 13 and 14 |

In the embodiment of the present information, the information searched from a search field in accordance with a search strategy may not be sorted but displayed directly, or displayed after being sorted. In order to relect the real-time changes on the search results, the present invetion further provides a method for sorting the information in accordance with the real-time parameters of the information.

To be specific, the method comprises, prior to providing the sorted information to the user, performing the following operations with respect to each search field for the current search: with respect to the information searched from the search field in accordance with the search strategies corresponding to the same priority weight factor, determining values of the real-time parameters of the information, determining a real-time weight of the information in accordance with the real-time weight factor of the real-time parameters and the determined values, and sorting the information searched from the search field in accordance with the search strategies corresponding to the same priority weight factor based on the real-time weight of the information.

The real-time parameters of the information include, but are not limited to, user's click rate and service customization amount. The information may be sorted in accordance with, but not limited to, a descending order of the real-time weights of the information, i.e., the information having a larger real-time weight is placed at the top, while the information having a smaller real-time weight is placed at the bottom.

In the embodiment of the present invention, when determining the real-time weight of the information, a weight of the respective real-time parameter may be obtained by multiplying the real-time weight factor by the parameter value, and then the weights of the real-time parameters are added to obtain the real-time weight of the information. For example, if the real-time parameters are the user's click rate and the service customization amount, wherein the user's click rate is a, a real-time weight factor of the user's click rate is W1, the service customization amount is b, a real-time weight factor of the service customization amount is W2, the real-time weight of the information is a*W1+b*W2.

In addition, in order to reduce the computation load, when determining the real-time weight of the information, the values of the real-time parameters may be processed, and then the real-time weight of the information may be determined in accordance with the processed parameter values through the above-mentioned method. The method for processing the values of the real-time parameters may include, but is not limited to, the following steps: with respect to the information searched from the search field in accordance with the search strategies corresponding to the same priority weight factor, sorting the information in accordance with a descending order of the values of the real-time parameters, and assigning values to the information in accordance with the resultant order. For example, if the number of the information searched from a search field in accordance with a search strategy is N, after the information is sorted, a value N is assigned to the information at the first place (i.e., the real-time parameter of the information has the largest value), a value N-1 is assigned to the information at the second place, ..., and a value 1 is assigned to the information at the last place (i.e., the real-time parameter of the information has the smallest value). The value assigned to the information is just the value obtained after processing the value of the real-time parameter of the information.

In Table 2, for the real-time weights of the inforamtion, information 1 > information 2 > information 3 > information 4 > information 5, information 6 > information 7, information 8 > information 9 > information 10 > information 11 > information 12, and information 13 > information 14, the information searched from the search fields in accordance with the search strategies may be sorted as shown in Table 3.

**Table 3**

| |
|---|
| Information 1 |
| Information 2 |
| Information 3 |
| Information 4 |
| Information 5 |
| Information 6 |
| Information 7 |
| Information 8 |
| Information 9 |
| Information 10 |
| Information 11 |
| Information 12 |
| Information 13 |
| Information 14 |

The way for sorting the searched information will be described hereinafter.

A search strategy matrix is generated in advance in accordance with the preset search strategies. The search strategy matrix has a size of M*N, wherein M and N are both natural numbers. The search strategies on a row correspond to an identical priority weight factor. In other words, the preset search strategies correspond to M priority weight factors, each row corresponding to one priority weight factor and including N search strategies. If the number of the search strategies corresponding to a priority weight factor is less than N, e.g., N1 (N>N1), the (N1+1)^{th} to the N^{th} locations on the row are left blank.

In the search strategy matrix, the priority weight factors corresponding to the rows may, but not limited to, increase or decrease progressively.

In a specific embodiment of the present invention, if the completely exact matching, the precise query with the special characters being filtered out, the Pinyin all-letters query and the Pinyin initial-letter query correspond to an identical priority weight factor, the full matched word segment query and the partially matched word segment query correspond to an identical priority weight factor, and the fuzzy matching in Chinese and the fuzzy matching in English correspond to an identical priority weight factor, it may be determined that the search strategy matrix has a size of 6*4, as shown in Fig.11. The first row of the matrix may be called as a precise query layer, the second row may be called as a prefix query layer, the third row may be called as a suffix query layer, the fourth row may be called as a word segment matching layer, the fifth row may be called as a fuzzy matching layer, and the sixth row may be called an error-correction query layer. The priority weight factors corresponding to the rows decrease progressively.

When the information is searched in accordance with the search keyword input by the user, the search strategies are selected from the search strategy matrix with respect to each search field, and a search strategy submatrix corresponding to the search field is generated in accordance with the selected search strategies. The generation method is similar as the method mentioned above and it will not be repeated herein. In addition, the process of searching for information in accordance with the search strategies in the search strategy submatrix is similar as the process mentioned above and it will not repeated herein either.

When sorting the information searched from the search fields in accordance with the search strategies, the information searched in accordance with the search strategies on each row of the search strategy submatrix may be regarded as a data block. If the search strategy submatrix corresponding to a search field includes S rows, S data blocks will be obtained, and each data block includes at least one piece of searched information. Then, the resultant data blocks are sorted in accordance with the priority weight factors corresponding to the rows. When sorting the information searched from the search fields, the priority weight factors of the search fields may be determined respectively, and then the data blocks corresponding to the search fields may be sorted in accordance with the priority weight factors of the search fields. Preferably, the information in each data block may further be sorted in accordance with the real-time parameters of the information.

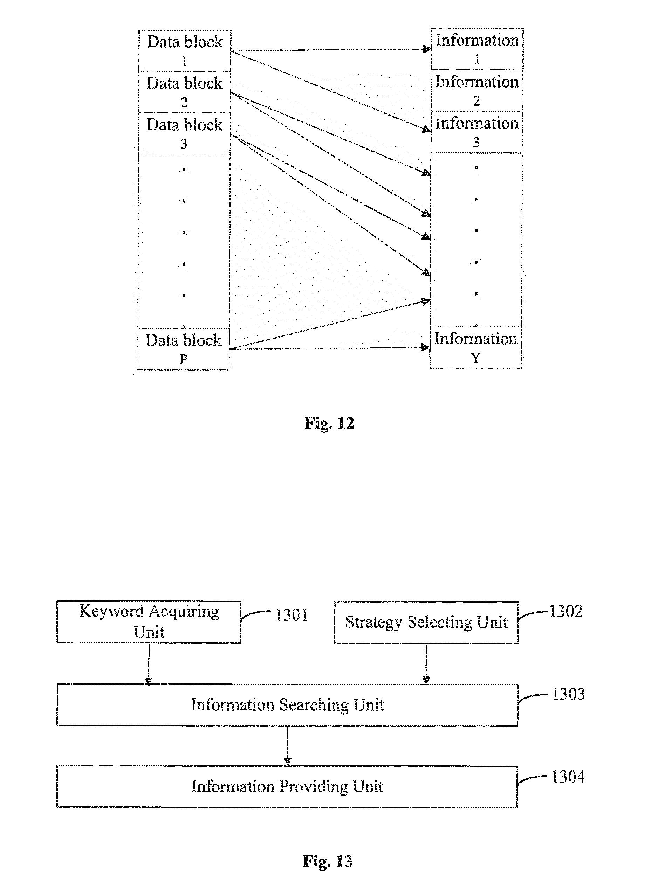

The order of the data blocks sorted through the above-mentioned method may, but not limited to, be shown in Fig.12. Y pieces of information have been searched and included in P data blocks. The information included in each data block is sorted in accordance with two real-time parameters, i.e., the user's click rate and the service customization amount.

When the searched information is displayed to the user, limited amounts of the information may be displayed on a single page. Hence, in accordance with the amounts of the information capable of being displayed on the page, corresponding amounts of the information may be extracted from the searched information sequentially.

The information in the right column in Fig.12 may be directly extracted sequentially. Preferably, in order to improve the efficiency, the information may also be extracted in accordance with the data blocks shown in Fig.12. For example, 10 pieces of information can be displayed on a single page, data block 1 includes 3 pieces of information, data block 2 includes 4 pieces of information and data block 3 includes 5 pieces of information, the first 10 pieces of information are included in data block 1, data block 2 and data block 3 respectively, so all pieces of information included in data blocks 1, 2 and the first 3 pieces of information included in data block 3 may be directly extracted.

As can be seen from the above technical solutions of the present invention, the search is not performed directly in accordance with the search keyword input by the user any more. Instead, at least one search strategy is selected at first, the search keyword input by the user is processed in accordance with each selected search strategy to obtain the processed search keyword, and then the information corresponding to the processed search keyword is searched. As a result, it is able to search information in accordance with a plurality of search keywords. If the search keyword input by the user is inaccurate and unable to accurately reflect the user's search intention, it is able to reflect the user's search intention in an overall and accurate manner in accordance with the search keyword processed with the search strategies. As a result, it is able to improve the accuracy of search and increase the amount of the searched information.

Corresponding to the above-mentioned method for providing information, the present invention further provides a device for providing information as shown in Fig.13, which comprises:
a search keyword acquiring unit 1301, configured to acquire a search keyword input by a user;
a strategy selecting unit 1302, configured to select at least one search strategy from the preset search strategies;
an information searching unit 1303, configured to, with respect to each search strategy selected by the strategy selecting unit 1302, process the search keyword acquired by the search keyword acquiring unit 1301 in accordance with the search strategy, and searching for information corresponding to the processed search keyword; and
an information providing unit 1304, configured to provide the information searched by the information searching unit 1303 to the user.

Preferably, the strategy selecting unit 1302 is specifically configured to, with respect to each search field for the current search, determining the search strategies corresponding to the search field from the preset search strategies, and using the determined search strategies as the search strategies for the search field.
The information searching unit 1303 is specifically configured to, with respect to the search fields, to perform the following operations in accordance with a search order of the searching fields: processing the search keyword acquired by the keyword acquiring unit 1301 in accordance with the search strategies for the search fields, and searching for the information corresponding to the processed search keyword from the search fields of the information.

More preferably, the information providing device further comprises:
an information identifying unit, configured to identify the information as searched after the information corresponding to the processed search keyword has been searched by the information searching unit 1303 from the search fields.
The information searching unit 1303 is specifically configured to search the information corresponding to the processed search keyword from the search fields of the information identified that is not as searched.

More preferably, the information providing unit 1304 is specifically configured to determine the priority weight factors of the search fields; sort the information searched from the search fields in accordance with the priority weight factors of the search fields; with respect to each search field, perform the following operations; determining the priority weight factors of the search strategies for the search field, and sorting the inforamtion searched in accordance with the search strategies based on the priority weight factors of the search strategies; and provide the sorted information to the user.

More preferably, the information providing device further comprises:
a sorting unit configured to, prior to providing the sorted information to the user by the information providing unit 1304, perform the following operations with respect to each search field for the current search: determining, with respect to the information searched from the search field in accordance with the search strategies with the same priority weight factor, values of the real-time parameters of the information, determining a real-time weight of the information in accordance with the real-time weight factors of the real-time parameters and the determined parameter values, and sorting the information searched from the search field in accordance with the search strategies with the same priority weight factor based on the real-time weight of the information.

The above are merely the preferred embodiments of the present invention, but are not used to limit the present invention. Any modification, substitution or improvement, if without departing from the spirit and principle of the present invention, shall fall within the scope of the present invention.

It should be appreciated that, the present invention may be provided as a method, a system or a computer program product, so the present invention may be in the form of full hardware embodiments, full software embodiments, or combinations thereof. In addition, the present invention may be in the form of a computer program product implemented on one or more computer-readable storage mediums (including but not limited to disk memory, CD-ROM and optical memory) including computer-readable program codes.

The present invention is described with reference to the flow charts and/or block diagrams showing the method, device (system) and computer program product according to the embodiments of the present invention. It should be appreciated that each process and/or block, or combinations thereof, in the flow charts and/or block diagrams may be implemented via computer program commands. These computer program commands may be applied to a general-purpose computer, a special-purpose computer, an embedded processor or any other processor of programmable data processing equipment, so as to form a machine, thereby to obtain the means capable of effecting the functions specified in one or more processes in the flow charts and/or one or more blocks in the block diagrams in accordance with the commands executed by the computer or the processor of the other programmable data processing equipment.

These computer program commands may also be stored in a computer-readable memory capable of guiding the computer or the other programmable data processing equipment to work in a special manner, so as to form a product including a command device capable of effecting the functions specified in one or more processes in the flow charts and/or one or more blocks in the block diagrams.

These computer program commands may also be loaded onto a computer or the other programmable data processing equipment, so as to perform a series of operations thereon and generate the processings implemented by the computer, thereby to provide the steps capable of effecting the functions specified one or more processes in the flow charts and/or one or more blocks in the block diagrams in accordance with the instructions.

Although the preferred embodiments are described above, a person skilled in the art may make modifications and alterations to these embodiments in accordance with the basic concept of the present invention. So, the attached claims are intended to include the preferred embodiments and all of the modifications and alterations that fall within the scope of the present invention.

Obviously, a person skilled in the art may make modifications and alterations if without departing from the spirit and scope of the present invention. The present invention is also intended to include the modifications and alterations if they fall within the scope of the claims and the equivalents thereof.

## Claims

1. A method for sorting search results, comprising the steps of:
A. for each search item, extracting an M*N search strategy submatrix from an N*N search strategy matrix, each row of the search strategy submatrix corresponding to a search strategy layer, priority weights of the search strategy layers corresponding to the first to the M^{th} rows increasing or decreasing progressively, the N search strategies on the same search strategy layer being of the same priority, M and N being natural numbers greater than 1, and M≤N;
B. selecting at least one search strategy from each search strategy layer of the search strategy submatrix to assemble a query set, matching the query set with all searched files according to the search strategies, and multiplying file scores by the priority weights corresponding to the search strategies to obtain overall file scores, each overall file score being used as a result set object;
C. generating M data blocks, each of the data blocks corresponding to at least one result set object, and storing all the result set objects in an array, each of the data blocks including scope information of a data field, i.e., superscripts and subscripts of the array; and
D. selecting the result set objects from the respective data block and assembling the selected result sets to form a complete result set.

2. The method according to claim 1, wherein a superscript of a field value parameter is m and a subscript of the field value parameter is n, m and n are both natural numbers and n>m, step D comprises:
D1: comparing m and n with the superscripts and subscripts recorded in a respective data block sequentially so as to locate the data block;
D2: judging whether m and n is within an identical data block, if yes, turning to D7 and otherwise turning to D3;
D3: the data block where the superscript m is located is regarded as a first data block and the data block where the subscript n is located is regarded as a last data block, extracting a result set object subset consisting of the result set object corresponding to the superscript m to the last result set object from the first data block, judging whether the number of the data blocks between the superscript m and the subscript n is greater than 2, if yes turning to D5 and otherwise turning to D4;
D4: extracting all the result subsets from all the data blocks between the first data block and the last data block;
D5: extracting an upper data subset consisting of a first result set object to the result set object corresponding to the subscript n from the last data block;
D6: combining the extracted result set objects sequentially as a current result set; and
D7: returning to the current result set.

3. The method according to claim 1, wherein subsequent to step D, the method further comprises:
using collected real-time data as external sorting factors to generate a sorting factor matrix, each row of the sorting factor matrix corresponding to a search strategy layer of the search strategy submatrix;
locating the data blocks to be sorted and the in-block regions, and sorting the in-block regions of the data blocks to be sorted in accordance with the sorting factor matrix; and
selecting the result set objects from the sorted data blocks, and assembling the selected result sets to form a complete result set.

4. A device for sorting search results, comprising:
a search strategy matrix generating module, configured to, for each search item, extract an M*N search strategy submatrix from an N*N search strategy matrix, each row of the search strategy submatrix corresponding to a search strategy layer, the priority weights of the search strategy layers corresponding to the first to the M^{th} rows increasing or decreasing progressively, the N search strategies on the same search strategy layer being of the same priority, M and N being natural numbers greater than 1, and M≤N;
a result set object module, configured to select at least one search strategy from each search strategy layer of the search strategy submatrix to assemble a query set, match the query set with all searched files according to the search strategies, and multiply file scores by the priority weights corresponding to the search strategies to obtain overall file scores, each overall file score being used as a result set object;
a data block dividing module, configured to generate M data blocks, each of the data blocks corresponding to at least one result set object, and store all the result set objects in an array, each of the data blocks including scope information of a data field, i.e., superscripts and subscripts of the array; and
an assembling module, configured to select the result set objects from the respective data block and assemble the selected result sets to form a complete result set.

5. The device according to claim 4, further comprising:
an external sorting factor unit, configured to use collected real-time data as external sorting factors to generate a sorting factor matrix, each row of the sorting factor matrix corresponds to a search strategy layer of the search strategy submatrix;
an in-block sorting unit, configured to locate the data blocks to be sorted and the in-block regions, and sort the in-block regions of the data blocks to be sorted in accordance with the sorting factor matrix; and
a data set secondary assembling unit, configured to select result set objects from the data blocks sorted by the in-block sorting unit, and assemble the selected result sets to form a complete result set.

6. A method for providing information, comprising:
acquiring a search keyword input by a user;
selecting at least one search strategy from the preset search strategies;
with respect to each selected search strategy, processing the search keyword according to the search strategy, and searching the information corresponding to the processed search keyword; and
providing the searched information to the user.

7. The method according to claim 6, wherein
the step of selecting at least one search strategy from the preset search strategies comprises:
with respect to each search field for a current search, determining at least one search strategy corresponding to the search field from the preset search strategies, and using the determined search strategies as the search strategies for the search field, and
the step of, with respect to each of the selected search strategies, processing the search keyword in accordance with the selected search strategy, and searching for information corresponding to the processed search keyword comprises:
performing the following operations on the search fields for the current search in accordance with a search order of the search fields: with respect to the search strategies for the search fields, processing the search keyword in accordance with the search order of the search strategies; and searching for the information corresponding to the processed search keyword from the search fields of the information.

8. The method according to claim 7, wherein, subsequent to the step of searching the information corresponding to the processed search keyword from the search fields of the information, the method further comprises:
identifying the information as searched, and
the step of searching the information corresponding to the processed search keyword from the search fields of the information comprises:
searching the information corresponding to the processed search keyword from the search fields of the information that not identified as searched.

9. The method according to claim 7, wherein the search order of the search fields is determined in accordance with priority weight factors of the search fields, and
the search order of the search strategies is determined in accordance with priority weight factors of the search strategies.

10. The method according to claim 7, wherein the step of providing the searched information to a user comprises:
determining the priority weight factors of the search fields for the current search respectively;
sorting the information searched from the search fields in accordance with the priority weight factors of the search fields;
with respect to each search field for the current search, determining the priority weight factors of the search strategies for the search fields and sorting the searched information in accordance with the priority weight factors of the search strategies; and
providing the sorted information to the user.

11. The method according to claim 10, wherein, prior to providing the sorted information to the user, the method further comprises:
performing the following operations with respect to each search field for the current search:
with respect to the information searched from the search field in accordance with the search strategies corresponding to the same priority weight factor, determining values of the real-time parameters of the information, determining a real-time weight of the information in accordance with the real-time weight factor of the real-time parameters and the determined values; and
sorting the information searched from the search field in accordance with the search strategies corresponding to the same priority weight factor based on the real-time weight of the information.

12. The method according to any one of claims 6 to 11, wherein the preset search strategies include at least one of:
completely exact matching, precise query with the special characters being filtered out, Pinyin all-letters query, Pinyin initial-letter query, prefix query, suffix query, fully matched word segment query, partially matched word segment query, fuzzy matching in Chinese, fuzzy matching in English and error-correction query.

13. A device for providing information, comprising:
a keyword acquiring unit, configured to acquire a search keyword input by a user;
a strategy selecting unit, configured to select at least one search strategy from the preset search strategies;
an information searching unit, configured to, with respect to each selected search strategy, process the search keyword acquired by the keyword acquiring unit according to the search strategy, and search the information corresponding to the processed search keyword; and
an information providing unit, configured to provide the information searched by the information searching unit to the user.

14. The device according to claim 13, wherein the strategy selecting unit is specifically configured to, with respect to each search field for a current search, determine the search strategies corresponding to the search field from the preset search strategies, and use the determined search strategies as the search strategies for the search field; and
the information searching unit is specifically configured to perform the following operations on the search fields for the current search in accordance with a search order of the searching fields: processing the search keyword acquired by the keyword acquiring unit in accordance with the search strategies for the search fields, and searching for the information corresponding to the processed search keyword from the search fields of the information.

15. The device according to claim 14, further comprising:
an information identifying unit, configured to identify the information as searched after the information corresponding to the processed search keyword has been searched by the information searching unit from the search fields of the information, and
the information searching unit is specifically configured to search for the information corresponding to the processed search keyword from the search fields of the information that not identified as searched.

16. The device according to claim 14, wherein the information providing unit is specifically configured to determine the priority weight factors of the search fields for the current search; sort the information searched from the search fields in accordance with the priority weight factors of the search fields; with respect to each search field for the current search, perform the following operations; determining the priority weight factors of the search strategies for the search field, and sorting the inforamtion searched in accordance with the search strategies based on the priority weight factors of the search strategies; and provide the sorted information to the user.

17. The device according to claim 16, further comprising:
a sorting unit configured to, prior to providing the sorted information to the user by the information providing unit, perform the following operations with respect to each search field for the current search:
determining, with respect to the information searched from the search field in accordance with the search strategies corresponding to the same priority weight factor, values of the real-time parameters of the information, determine a real-time weight of the information in accordance with the real-time weight factors of the real-time parameters and the determined parameter values; and sorting the information searched from the search field in accordance with the search strategies corresponding to the same priority weight factor based on the real-time weight of the information.
